# EUROPEAN PATENT SPECIFICATION

(11) **EP 1 799 757 B1**
(45) Date of publication and mention of the grant of the patent: **04.01.2017**
(21) Application number: 05797217.6
(22) Date of filing: 03.10.2005
(51) Int. Cl.: C08K 5/098, C08K 5/09, C08K 3/22

(54) **AROMATIC HIGH GLASS TRANSITION TEMPERATURE SULFONE POLYMER COMPOSITION**
AROMATISCHE SULFONPOLYMERZUSAMMENSETZUNG MIT HOHEM GLASPUNKT
COMPOSITION POLYMERE SULFONE AROMATIQUE A TEMPERATURE DE TRANSITION VITREUSE ELEVEE

(30) Priority: 04.10.2004 US 615025 P; 24.02.2005 EP 05101408
(43) Date of publication of application: 27.06.2007
(73) Proprietor: Solvay Specialty Polymers USA, LLC., Alpharetta, GA 30005 (US)
(72) Inventor: EL-HIBRI, Mohammad Jamal, Atlanta, Georgia 30328 (US); REICHMANN, Mark G., Roswell, Georgia 30075 (US); BRADEMEYER, Douglas, Georgia 30040 (US)
(74) Representative: Vande Gucht, Anne
(86) International application number: PCT/EP2005/054975
(87) International publication number: WO 2006/037773

(56) References cited:
- EP-A- 0 375 170
- EP-A- 0 727 456
- US-A- 4 420 528
- US-A1- 2004 209 081
- DATABASE CAPLUS [Online] CHEMICAL ABSTRACTS SERVICE, COLUMBUS, OHIO, US; 29 November 1995 (1995-11-29), AKYAMA, MASAMI: "Heat-resistant and electrically conductive resin compositions and heat-resistant integrated circuit (IC) trays with good dimensional stability using them" XP002337661 retrieved from STN Database accession no. 1995:947329 & JP 07 238216 A (PLAS TECH CORP) 12 September 1995 (1995-09-12)

## Description

### REFERENCE TO RELATED APPLICATIONS

This application claims priority to U.S. provisional application 60/615,025, filed October 4, 2004 and to EP application 05101408.2, filed on February 24, 2005, whose disclosures are incorporated herein by reference.

On one hand, the nature of sulfone polymers is such that a certain amount of extractable sulfate is irremediably present aside the polymers. On the other hand, there is a need for aromatic high glass transition temperature polymers, such as polysulfone, polyethersulfone, and polyphenylsulfone, suitable to be used in applications where extractable ionics must be minimized, like in sensitive electronics applications such as the semiconductor industry. It has been already attempted to develop additive packages for the purpose of lowering the level of extracted sulfate.

Unfortunately, these additives which reduce the level of extractable sulfate are also submitted to extraction. As a result, these additives lead to further extractable issues. These and other drawbacks are remarkably overcome by the aromatic high glass transition temperature polymer composition of the invention.

Thus, it is an object of the invention an aromatic high glass transition temperature sulfone polymer composition as defined in claim 1.

Surprisingly, the combination of the oxide and the carboxylate advantageously provides an exceptional efficiency in sequestering the sulfate ion. It is preferred that these additives provide this benefit, and, in addition, they retain the transparent appearance of the aromatic sulfone polymer.

For the purpose of the invention, the term "polymer" is intended to denote any material consisting essentially of recurring units, and having a molecular weight above 2000.

For the purpose of the invention, the terms "aromatic sulfone polymer (P)" are intended to denote any polymer, at least 5 % wt of the recurring units thereof comprise at least one group of formula 1 :

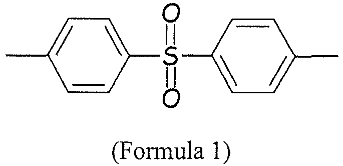

The aromatic sulfone polymer (P) has a glass transition temperature of advantageously at least 150°C, preferably at least 160°C, more preferably at least 175°C.

The aromatic sulfone polymer (P) comprises at least 5 % wt, preferably at least 20 % wt, more preferably at least 30 % wt, still more preferably at least 50 % wt, even more preferably at least 75 % wt of recurring units comprising at least one group of formula 1 here above. Most preferably, the aromatic sulfone polymer (P) contains no recurring unit other than recurring units comprising at least one group of formula 1 here above.

The Applicant has found that a percentage of at least 5 wt % of recurring units comprising at least one group of formula 1 here above in the aromatic sulfone polymer (P) is enough to impart to the inventive composition the high temperature behavior sought for sensitive electronics applications.

The Applicant thinks, without this limiting the scope of its invention, that the presence of aromatic polycarbonate polymer can be detrimental to the mechanical and ionics extraction properties of the inventive compositions.

Thus, the composition of the invention comprises advantageously less than 5 % by weight, based on the total weight of the composition, of aromatic polycarbonate (PC).

For the purpose of the invention, the terms "aromatic polycarbonate (PC)" are intended to denote any polymer, more than 50 % wt of the recurring units thereof comply with formula 2 here below : 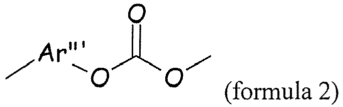 wherein Ar'" is a bivalent group comprising at least one aromatic ring, preferably comprising at least two aromatic rings.

Examples of aromatic polycarbonates (PC) are polymers comprising recurring units of formula 3 and/or 4 here below : 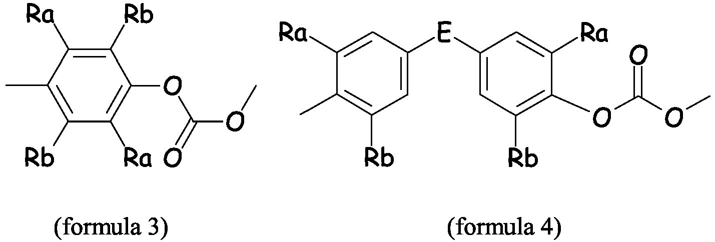 wherein :
- each of Ra and Rb, equal or different at each occurrence, are independently a hydrogen atom, a halogen or a C₁-C₆ hydrocarbon group;
- E is a divalent bridging group chosen among the following structures :

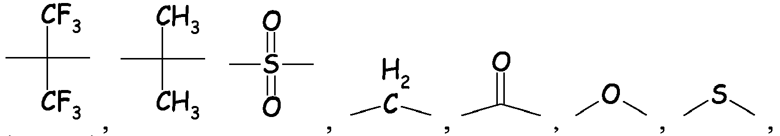

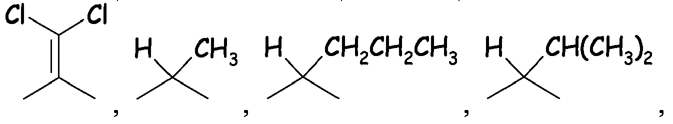

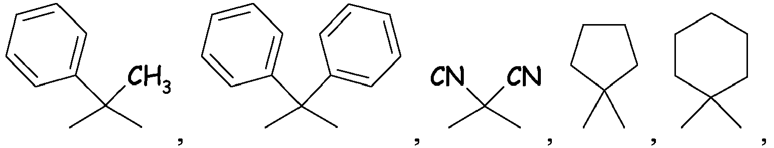

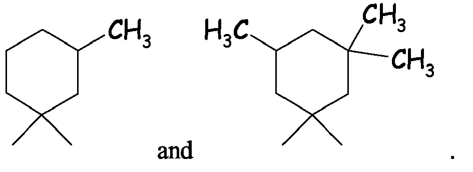

Aromatic polycarbonates (PC) are notably commercially available under the trade names LEXAN^{®} (from GE), MAKROLON^{®} (from Bayer), CALIBER^{®} (from Dow), PANLITE^{®} (from Teijin), and IUPILON^{®} (from Mitsubishi).

Aromatic polycarbonates (PC) can be prepared commercially by two different processes : Schotten-Baumann reaction of phosgene and an aromatic diol in an amine-catalyzed interfacial condensation reaction, or via base-catalyzed transesterification of a bisphenol with a monomeric carbonate such as diphenyl carbonate.

According to a preferred embodiment of the invention, the composition of the invention is free from aromatic polycarbonate (PC).

The composition of the invention comprises advantageously more than 90 %, preferably more than 92 %, more preferably more than 95 %, still more preferably more than 97.5 % by weight of aromatic sulfone polymer (P), based on the total weight of the composition.

When the composition comprises more than 90 % by weight of aromatic sulfone polymer (P), based on the total weight of the composition, then it possesses the outstanding mechanical properties and thermal resistance appreciated in sensitive electronics applications, such as the semiconductor industry.

In a first preferred embodiment of the invention, at least 5 % wt of the recurring units of aromatic sulfone polymer (P) are recurring units (R1), in their imide form (R1-A) and/or amic acid forms [(R1-B) and (R1-C)] : 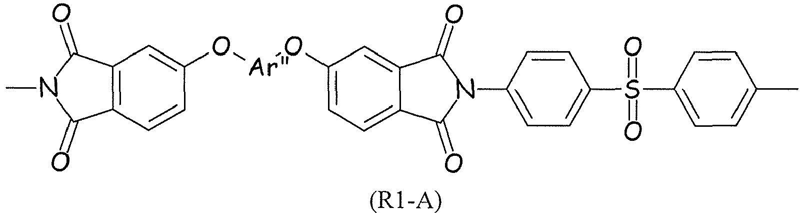 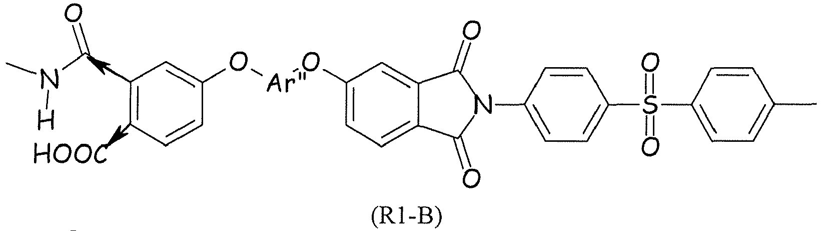 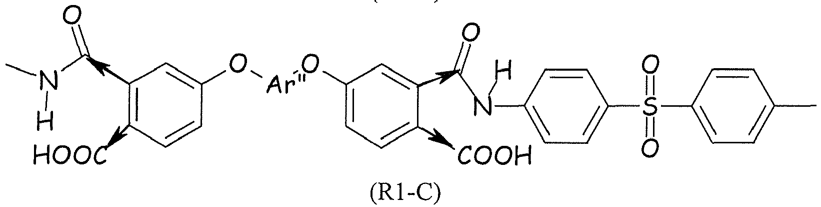 wherein :
- the → denotes isomerism so that in any recurring unit the groups to which the arrows point may exist as shown or in an interchanged position;
- Ar" is chosen among the following structures : 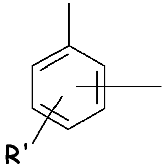 with the linking groups being in ortho, meta or para position and **R'** being a hydrogen atom or an alkyl radical comprising from 1 to 6 carbon atoms, 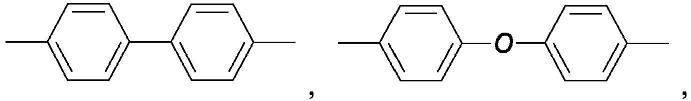 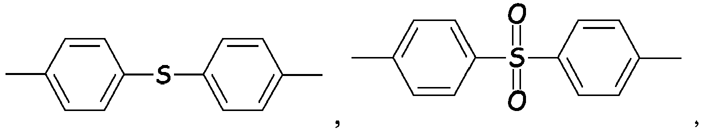 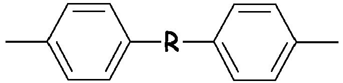 with R being an aliphatic divalent group of up to 6 carbon atoms, such as methylene, ethylene, isopropylene and the like, and mixtures thereof.

Aromatic sulfone polymer (P) according to the first preferred embodiment of the invention comprises at least 5 % wt, preferably at least 20 % wt, more preferably at least 30 % wt, still more preferably at least 50 % wt, even more preferably at least 75 % wt of recurring units (R1). Most preferably, it contains no recurring unit other than recurring units (R1).

In a second preferred embodiment of the invention, at least 5 % wt of the recurring units of aromatic sulfone polymer (P) are recurring units (R2) and/or recurring units (R3): 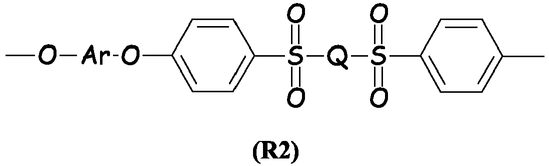 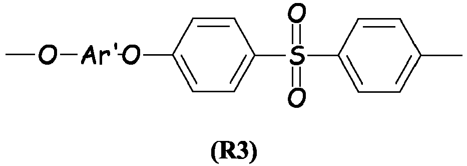 wherein :
- Q is a group chosen among the following structures : 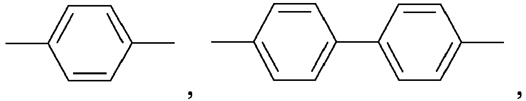 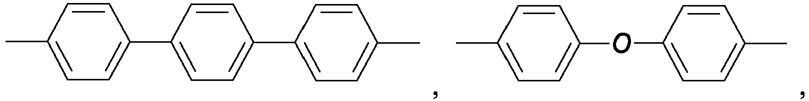 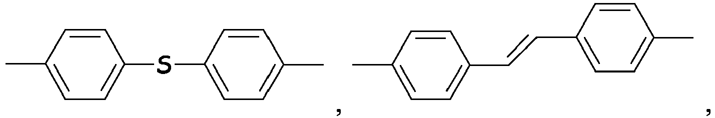 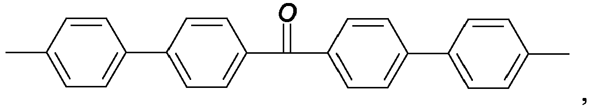 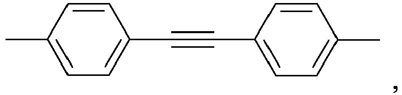 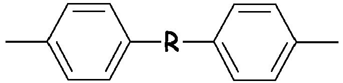 with R being : 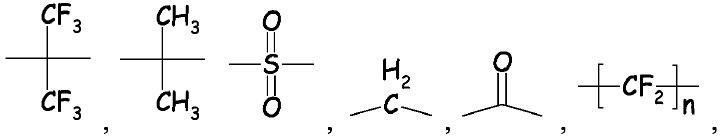 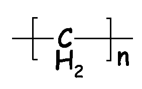 with n = integer from 1 to 6, or an aliphatic divalent group, linear or branched, of up to 6 carbon atoms;
   and mixtures thereof;
- Ar is a group chosen among the following structures : 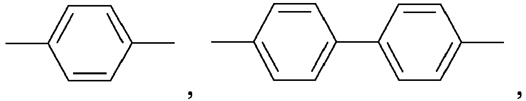 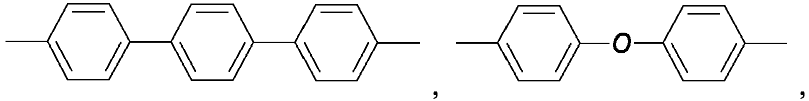 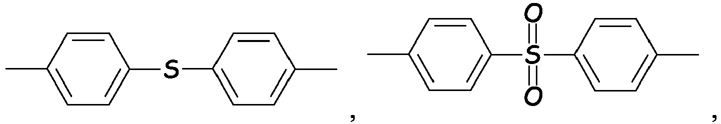 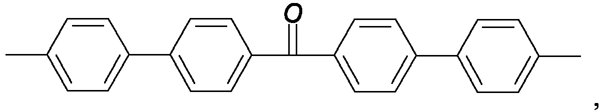 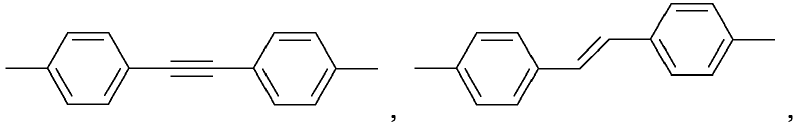 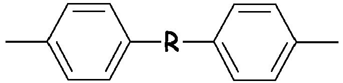 with R being : 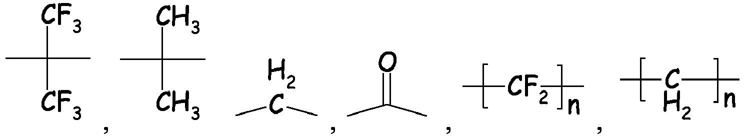 with n = integer from 1 to 6, or an aliphatic divalent group, linear or branched, of up to 6 carbon atoms;
   and mixtures thereof;
- Ar' is a group chosen among the following structures : 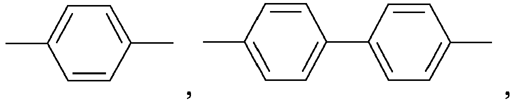 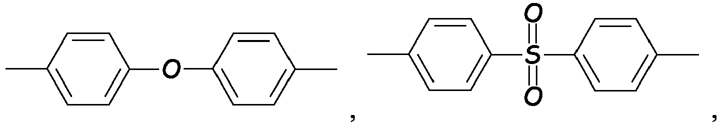 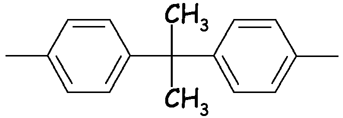 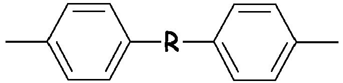 with R being : 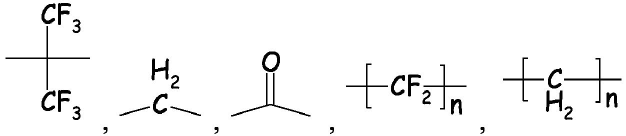 with n = integer from 1 to 6, or an aliphatic divalent group, linear or branched, of up to 6 carbon atoms;
   and mixtures thereof.

Recurring units (R2) are preferably chosen from : 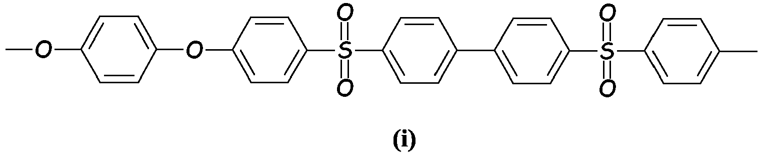 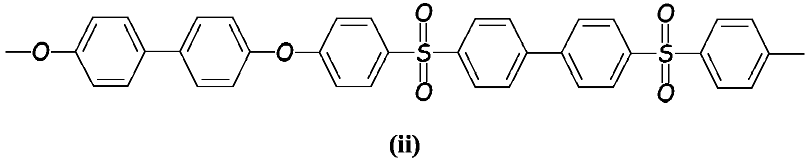 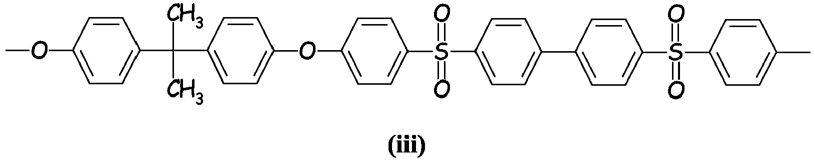 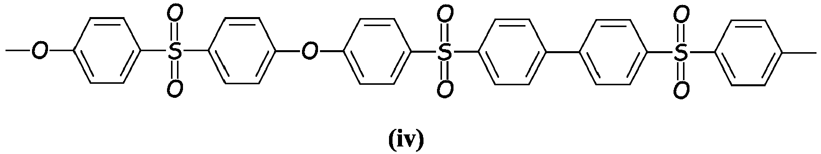 and mixtures thereof.

Recurring units (R3) are preferably chosen from : 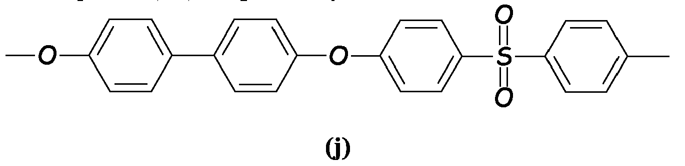 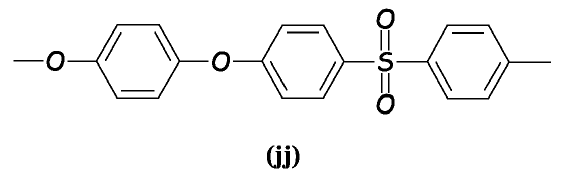 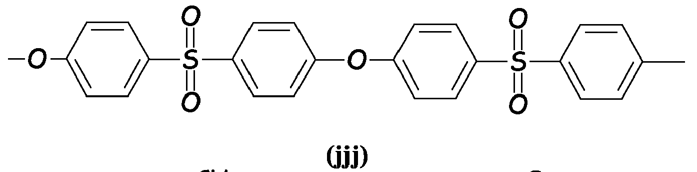 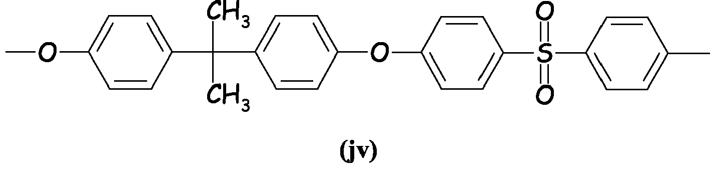 and mixtures thereof.

Aromatic sulfone polymer (P) according to the second preferred embodiment of the invention comprises at least 5 % wt, preferably at least 20 % wt, more preferably at least 30 % wt, still more preferably at least 50 % wt, even more preferably at least 75 % wt of recurring units (R2) and/or (R3). Most preferably, it contains no recurring unit other than recurring units (R2) and/or (R3).

Good results were obtained with aromatic sulfone polymer (P) the recurring units of which are recurring units (ii) (polybiphenyldisulfone, herein after), with aromatic sulfone polymer (P) the recurring units of which are recurring units (j) (polyphenylsulfone, hereinafter), with aromatic sulfone polymer (P) the recurring units of which are recurring units (jj) (polyetherethersulfone, hereinafter), with aromatic sulfone polymer (P) the recurring units of which are recurring units (jjj) and, optionally in addition, recurring units (jj) (polyethersulfone, hereinafter), and with aromatic sulfone polymer (P) the recurring units of which are recurring units (jv) (polysulfone, hereinafter).

Polyphenylsulfone is notably available as RADEL® R PPSF from Solvay Advanced Polymers, L.L.C.. Polysulfone is notably available as UDEL® PSF from Solvay Advanced Polymers, L.L.C.. Polyethersulfone is notably available as RADEL® A PES from Solvay Advanced Polymers, L.L.C..

Preferably, aromatic sulfone polymer (P) is chosen among the group consisting of polybiphenyldisulfone, polysulfone, polyphenylsulfone, polyethersulfone, copolymers and mixtures thereof.

The oxide of a metal is an oxide of an alkaline-earth metal or of a group 12 transition metal.

For the purpose of the invention, as group 12 transition metal, we intend designate the group of metals consisting of Zn, Cd, Hg, Uub.

More preferably, the oxide is chosen among the group consisting of CaO, MgO, ZnO and mixtures thereof. Still more preferably, the oxide is ZnO.

Preferably the carboxylate of a metal is a carboxylate of an alkaline-earth metal or of a group 12 transition metal.

More preferably, the carboxylate is chosen among the group consisting of carboxylates of Ca, Mg, Zn and mixtures thereof. Still more preferably, the carboxylate is a Zn carboxylate.

Preferably, the carboxylate is chosen among caprates (C₁₀), laurates (C₁₂), myristates (C₁₄), palmitates (C₁₆), stearates (C₁₈), arachidates (C₂₀), behenates (C₂₂), palmitoleates (C₁₆), oleates (C₁₈), gadoleates (C₂₀), ricinoleates (C₁₈), linoleates (C₁₈), linolenates (C₁₈), and mixtures thereof. More preferably, the carboxylate is a stearate.

Excellent results have been obtained with Zn stearate.

The aromatic high glass transition temperature polymer composition advantageously comprises at least 0.001 % wt, preferably at least 0.005 % wt, more preferably at least 0.01 % wt of the oxide, based on the total weight of the composition.

The aromatic high glass transition temperature polymer composition advantageously comprises at most 0.7 % wt, preferably at most 0.6 % wt, more preferably at most 0.5 % wt, even more preferably at most 0.3 % wt, most preferably at most 0.2 % wt of the oxide, based on the total weight of the composition.

Excellent results were obtained when the composition comprised from 0.02 to 0.10 % wt, based on the total weight of the composition, of the oxide.

The aromatic high glass transition temperature polymer composition advantageously comprises at least 0.005 % wt, preferably at least 0.01 % wt, more preferably at least 0.05 % wt of the carboxylate, based on the total weight of the composition.

The aromatic high glass transition temperature polymer composition advantageously comprises at most 1.00 % wt, preferably at most 0.75 % wt, more preferably at most 0.50 % wt of the carboxylate, based on the total weight of the composition.

Excellent results were obtained when the composition comprised from 0.05 to 0.35 % wt, based on the total weight of the composition, of the carboxylate.

The weight ratio between the oxide and the carboxylate in the composition of the invention is advantageously at most 1 wt/wt, preferably at most 0.75 wt/wt, more preferably at most 0.5 wt/wt.

The weight ratio between the oxide and the carboxylate in the composition of the invention is advantageously at least 0.05 wt/wt, preferably at least 0.075 wt/wt, more preferably at least 0.10 wt/wt.

Excellent results were obtained with weight ratios between the oxide and the carboxylate from 0.1 to 0.5 wt/wt.

Optionally, the high glass transition temperature sulfone polymer composition of the invention can further comprise fillers, lubricating agents, heat stabilizer, anti-static agents, extenders, reinforcing agents, organic and/or inorganic pigments like TiO₂, carbon black, antioxidants, flame retardants, smoke-suppressing agents.

The composition of the invention advantageously comprises at least one filler chosen from reinforcing fillers, structural fibers and mixtures thereof Structural fibers may include glass fiber, carbon or graphite fibers, and fibers formed of silicon carbide, alumina, titania, boron and the like, and may include mixtures comprising two or more such fibers. Reinforcing fillers which can also be used in the composition of the invention include notably pigments, flake, spherical and fibrous particulate filler reinforcements and nucleating agents such as talc, mica, titanium dioxide, potassium titanate, silica, kaolin, chalk, alumina, mineral fillers, and the like. The reinforcing fillers and structural fibers can be used alone or in any combination.

Another aspect of the present invention concerns a process for manufacturing the high glass transition temperature sulfone polymer composition as above described, which comprises mixing :
- the aromatic sulfone polymer (P);
- the oxide of a metal;
- the carboxylate of a metal.

Advantageously, the process of the invention comprises mixing by dry blending and/or melt compounding polymer (P), the oxide and the carboxylate.

Preferably, polymer (P), the oxide and the carboxylate are mixed by melt compounding.

Advantageously, polymer (P), the oxide and the carboxylate are melt compounded in continuous or batch devices. Such devices are well-known to those skilled in the art.

Examples of suitable continuous devices to melt compound the sulfone polymer composition of the invention are notably screw extruders. Thus, polymer (P), the oxide and the carboxylate and optionally other ingredients, are advantageously fed in powder or granular form in an extruder and the composition is extruded into strands and the strands are chopped into pellets.

Optionally, fillers, lubricating agents, heat stabilizer, anti-static agents, extenders, reinforcing agents, organic and/or inorganic pigments like TiO₂, carbon black, flame-retardants, smoke-suppressing agents may be added to the composition during the compounding step.

Preferably, polymer (P), the oxide and the carboxylate are melt compounded in a twin-screw extruder.

The composition can be further processed following standard methods for injection molding, extrusion, thermoforming, machining, and blow molding. Solution-based processing for coatings and membranes is also possible. Finished articles comprising the composition as above described can undergo standard post-fabrication operations such as ultrasonic welding, adhesive bonding, and laser marking as well as heat staking, threading, and machining.

Another object of the invention is an article comprising the polymer composition as above described.

Advantageously, the article is an injection molded article, an extrusion molded article, a shaped article, a coated article or a casted article. Preferably it is an injection molded article.

The articles according to the invention can be fabricated by processing the composition as above described following standard methods.

The present invention is described in greater detail below by referring to the Examples; however, the present invention is not limited to these examples.

### Examples 1 to 5 :

### Raw material:

RADEL® R 5600 polyphenylsulfone commercially available from Solvay Advanced Polymers, L.L.C., is a polyphenylsulfone obtained from the polycondensation of a 4,4'-dihalodiphenylsulfone and 4,4'-dihydroxydiphenyl.

### Compounding :

Zinc Oxide, Zn stearate and Mg stearate were mixed with the RADEL® R 5600 polyphenylsulfone pellets and melt compounded using a 25 mm diameter twin screw double vented Berstorff extruder having an L/D ratio of 33/1. Details of quantities used in the examples are reported in Table 1.

### Ionics extraction and analytical determinations

A sample of the compounded pellets from each of the formulations, as well as of RADEL® R 5600 polyphenylsulfone alone, have been submitted to ionics extraction according to the following procedure :
1.0 g of sample was placed in 5.0 ml of 18 mΩ water (Milli-Q available from Alltech Associates, Inc.). The samples were then placed in an oven at 85°C for 24 hours to extract the ions.

After 24 hours, the pellets have been separated and the water phase has been analysed by IC (Ion Chromatograpy), using the following analytical system:
Dionex DX500 Chromatography System;
Dionex GP50 Standard bore Gradient Pump;
Dionex ASRS Ultra 4 mm Suppressor;
Dionex CD20 Conductivity Detector;
Dionex AS11A Column, 4 mm;
Dionex AG11A Guard Column, 4 mm;
Dionex AS40 Autosampler, Inert Peek Flow Path.

The eluent used was 18 mΩ water, 0.2-0.4 mM KOH by provided by the EG40 Eluent Generator.

The ion chromatography was quantified using a minimum of 5-points linear calibration curve for each ion.
Results are joined in Table 1.

**Table 1**

| Component/ Property | Comparative example 1 | Comparative example 2 | Comparative example 3 | Comparative example 4 | Example 5 |
|---|---|---|---|---|---|
| | No additive package | Additives package | | | |
| ZnO (% wt) | | 0 | 0 | 0.50 | 0.03 |
| Zn stearate (% wt) | | 0 | 0.30 | 0 | 0.30 |
| Mg stearate (% wt) | | 0.30 | 0 | 0 | 0 |

| Composition aspect | | | | | |
|---|---|---|---|---|---|
| Transparency | Transparent | Opaque | Transparent | Transparent | Transparent |

| Ionics Extraction results (ng/g) | | | | | |
|---|---|---|---|---|---|
| Sulfate | 730 | 56 | 180 | 68 | 62 |
| Zinc | 55 | < 40 | 37 | 3400 | 80 |
| Mg | n.d. | 76 | n.d. | n.d. | n.d. |

### Examples 6 to 8 :

### Raw material:

UDEL® P3703 polysulfone commercially available from Solvay Advanced Polymers, L.L.C., is a polysulfone obtained from the polycondensation of a 4,4'-dihalodiphenylsulfone and bisphenol A.

### Compounding :

Zinc Oxide and Zinc stearate were mixed with the UDEL® P3703 polysulfone pellets and melt compounded using a 25 mm diameter twin screw double vented Berstorff extruder having an L/D ratio of 33/1. Details of quantities used in the examples are reported in Table 2.

### Ionics extraction and analytical determinations

Same procedure as followed for examples 1 to 5 was repeated for the compositions of examples 7 and 8, as well as for UDEL® P3703 polysulfone alone (comparative example 6). Results are joined in Table 2.

**Table 2**

| Component/ Property | Comparative example 6 | Example 7 | Example 8 |
|---|---|---|---|
| Additives package | | | |
| ZnO (% wt) | No additive package | 0.05 | 0.10 |
| Zn stearate (% wt) | | 0.25 | 0.20 |

| Ionics Extraction results (ng/g) | | | |
|---|---|---|---|
| Sulfate | 3.0 | 0.29 | 0.30 |
| Zinc | < 5.0 | < 5.0 | < 5.0 |

## Claims

1. Aromatic high glass transition temperature sulfone polymer composition comprising :
- at least one aromatic sulfone polymer (P), **characterized in that**
at least 5 % wt of the recurring units of the aromatic sulfone polymer (P) are recurring units (R1), in their imide form (R1-A) and/or amic acid forms [(R1-B) and (R1-C)] : 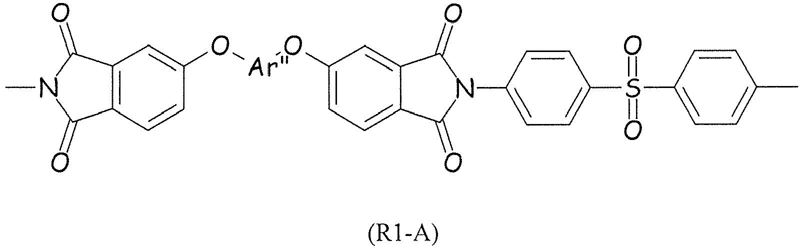 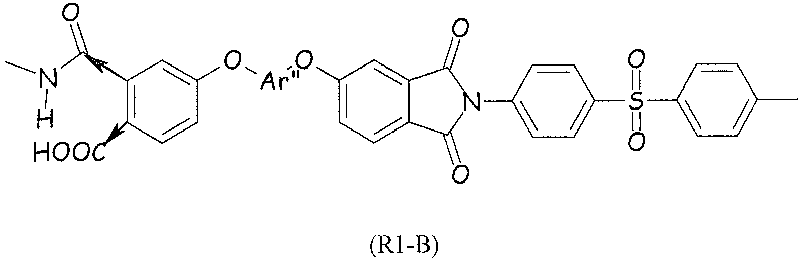 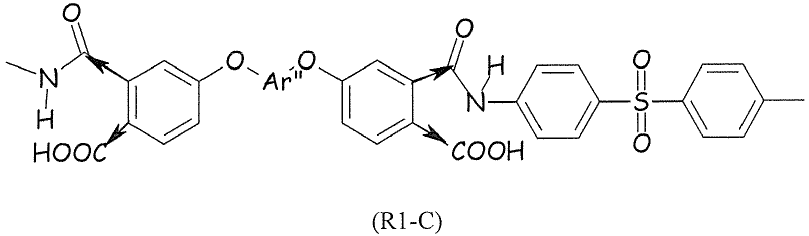 wherein :
- the → denotes isomerism so that in any recurring unit the groups to which the arrows point may exist as shown or in an interchanged position ;
- Ar" is chosen among the following structures : 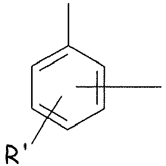 with the linking groups being in ortho, meta or para position and R' being a hydrogen atom or an alkyl radical comprising from 1 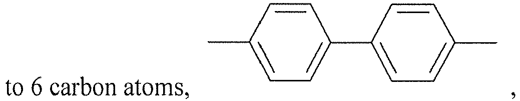 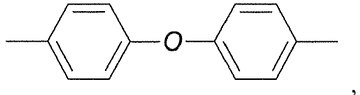 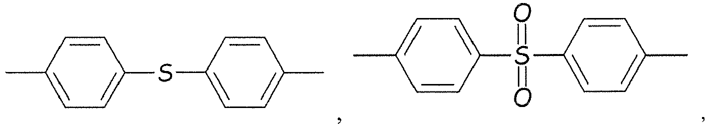 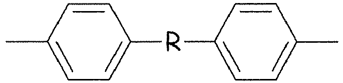 with R being an aliphatic divalent group of up to 6 carbon atoms, such as methylene, ethylene, isopropylene, and mixtures thereof; or
at least 5 % wt of the recurring units of the aromatic sulfone polymer (P) are recurring units (R2), as shown below : 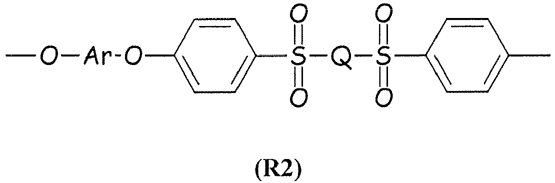 wherein :
- **Q** is a group chose among the following structures : 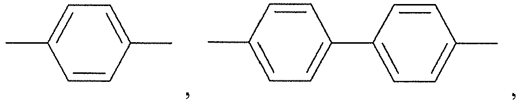 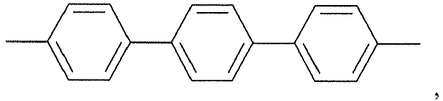 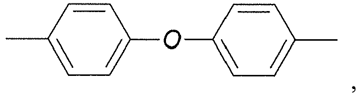 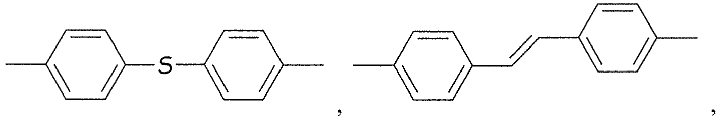 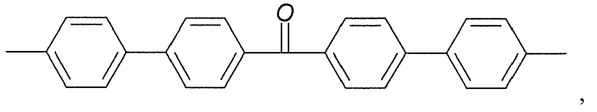 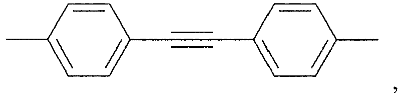 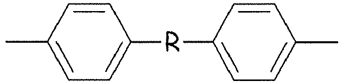 with **R** being : 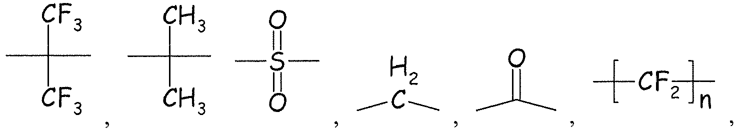 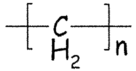 with n = integer from 1 to 6, or an aliphatic divalent group, linear or branched, of up to 6 carbon atoms ;
and mixtures thereof;
- **Ar** is a group chosen among the following structures : 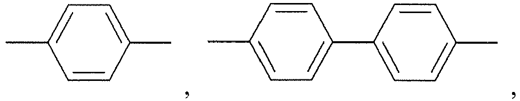 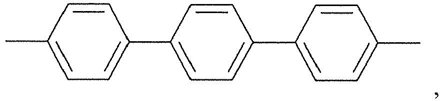 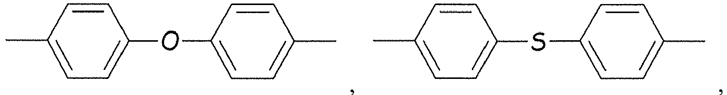 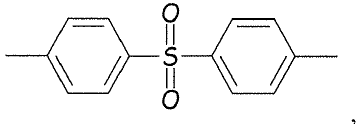 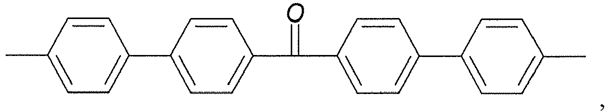 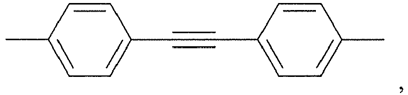 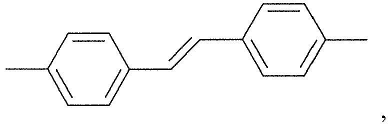 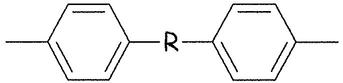 with **R** being : 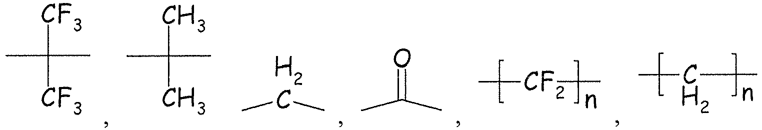 with n = integer from 1 to 6, or an aliphatic divalent group, linear or branched, of up to 6 carbon atoms ;
and mixtures thereof; or
at least 5 % wt of the recurring units of the aromatic sulfone polymer (P) are recurring units (**R3**) chosen from : 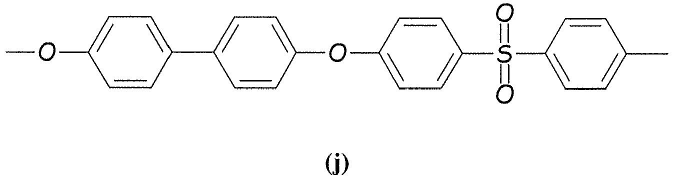 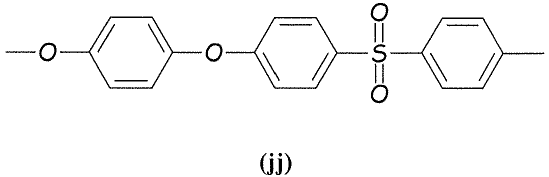 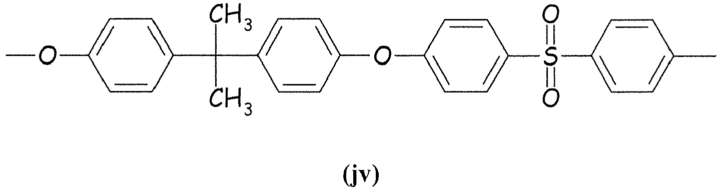 and mixtures thereof;
- at least one oxide of an alkaline-earth metal or of a group 12 transition metal
- at least one carboxylate of a metal, said carboxylate comprising at least 10 carbon atoms ;
- less than 5 % by weight, based on the total weight of the composition, of aromatic polycarbonate (PC).

2. Aromatic high glass transition temperature sulfone polymer composition of claim 1, **characterized in that** the composition is free from aromatic polycarbonate (PC).

3. Aromatic high glass transition temperature sulfone polymer composition of anyone of the preceding claims, **characterized in that** it comprises more than 90 % by weight, based on the total weight of the composition, of at least one aromatic sulfone polymer (P).

4. Aromatic high glass transition temperature polymer composition of anyone of preceding claims, **characterized in that** the oxide of a metal is an oxide of an alkaline-earth metal or of a group 12 transition metal.

5. Aromatic high glass transition temperature polymer composition of anyone of preceding claims, **characterized in that** the carboxylate of a metal is a carboxylate of an alkaline-earth metal or of a group 12 transition metal.

6. Aromatic high glass transition temperature sulfone polymer composition of anyone of preceding claims, **characterized in that** at least 50 % wt of the recurring units of the aromatic sulfone polymer (P) are recurring units (R1), in their imide form (R1-A) and/or amic acid forms [(R1-B) and (R1-C)].

7. Aromatic high glass transition temperature sulfone polymer composition according to anyone of Claim 1 to 5, **characterized in that** at least 50 % wt of the recurring units of the aromatic sulfone polymer (P) are recurring units (R2) and/or recurring units (R3).

8. Aromatic high glass transition temperature sulfone polymer composition according to anyone of preceding claims, **characterized in that** it comprises from 0.02 to 0.10 % wt, based on the total weight of the composition, of the oxide.

9. Aromatic high glass transition temperature sulfone polymer composition according to anyone of preceding claims, **characterized in that** it comprises from 0.05 to 0.35 % wt, based on the total weight of the composition, of the carboxylate.

10. Aromatic high glass transition temperature sulfone polymer composition according to anyone of preceding claims, **characterized in that** the weight ratio between the oxide and the carboxylate is from 0.1 to 0.5 wt/wt.

11. Process for manufacturing the high glass transition temperature sulfone polymer composition according to anyone of preceding claims, which comprises mixing :
- the aromatic sulfone polymer (P) ;
- the oxide of a metal;
- the carboxylate of a metal.

12. Article comprising the aromatic high glass transition temperature sulfone polymer composition of anyone of Claims 1 to 10.

## Patentansprüche

1. Aromatisches Sulfonpolymer mit hoher Glasübergangstemperatur enthaltende Zusammensetzung unfassend :
- mindestens ein aromatisches Sulfonpolymer (P), **dadurch gekennzeichnet, dass**
es sich bei mindestens 5 Gew.- % der Wiederholungseinheiten des aromatischen Sulfonpolymers (P) um Wiederholungseinheiten (R1) in ihrer Imidform (R1-A) und/oder Amidsäureform ([(R1-B) und (R1-C)] handelt : 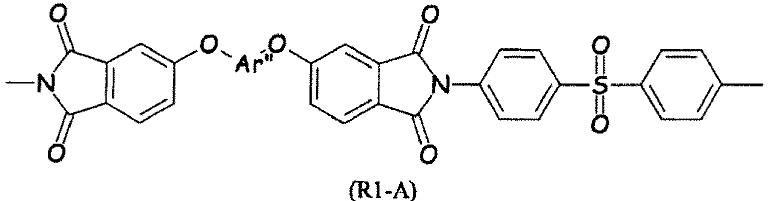 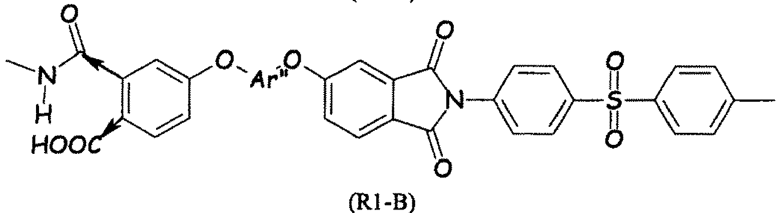 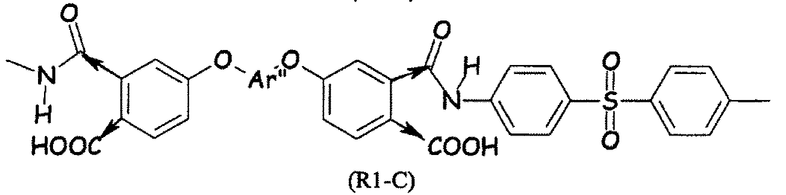 worin :
- der → Isomerie darstellt, so dass in jeder Wiederholungseinheit die Gruppen, auf die die Pfeile zeigen, wie gezeigt oder in einer ausgetauschten Position existieren können;
- Ar" unter den folgenden Strukturen ausgewählt ist : 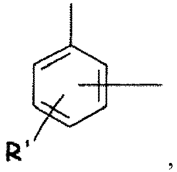 wobei die Verknüpfungsgruppen in ortho-, meta- oder paraStellung stehen können und R' für ein Wasserstoffatom oder einen Alkylrest mit 1 bis 6 Kohlenstoffatomen steht, 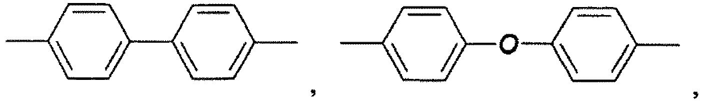 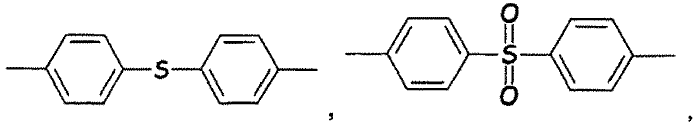 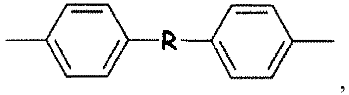 wobei R für eine aliphatische zweiwertige Gruppe mit bis zu 6 Kohlenstoffatomen, wie Methylen, Ethylen, Isopropylen und Mischungen davon, steht; oder
es sich bei mindestens 5 Gew.- % der Wiederholungseinheiten des aromatischen Sulfonpolymers (P) um Wiederholungseinheiten (R2), wie unten gezeigt, handelt : 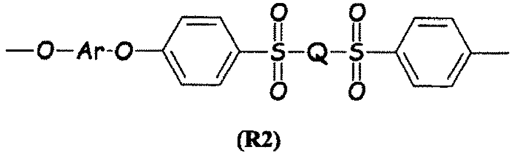 worin :
- Q für eine unter den folgenden Strukturen ausgewählte Gruppe steht : 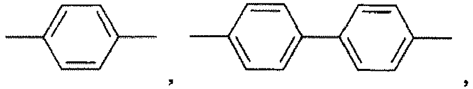 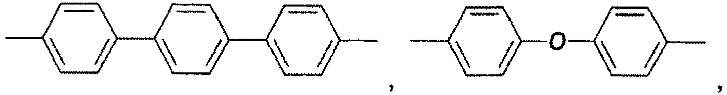 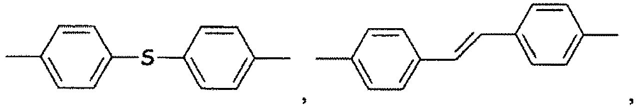 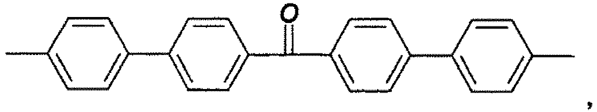 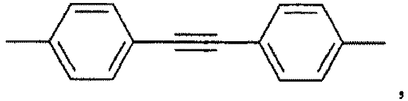 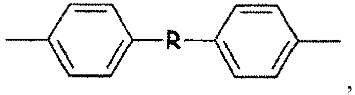 wobei R für : 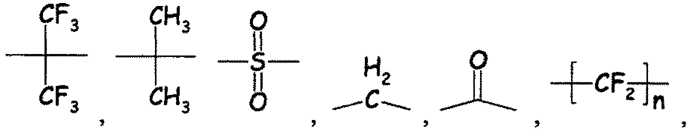 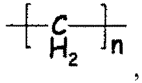 wobei n = ganze Zahl von 1 bis 6, oder eine lineare oder verzweigte aliphatische zweiwertige Gruppe mit bis zu 6 Kohlenstoffatomen steht; und Mischungen davon;
- Ar für eine unter den folgenden Strukturen ausgewählte Gruppe steht : 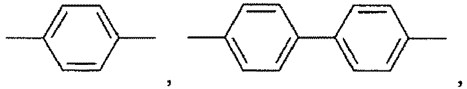 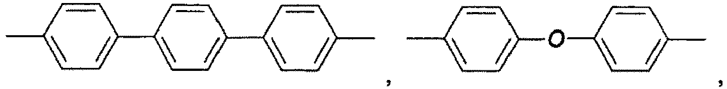 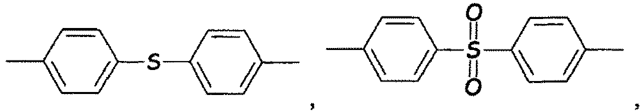 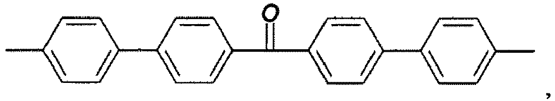 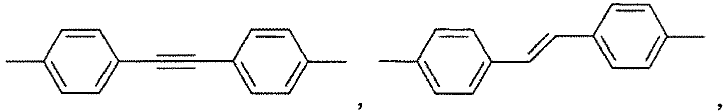 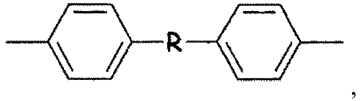 wobei R für : 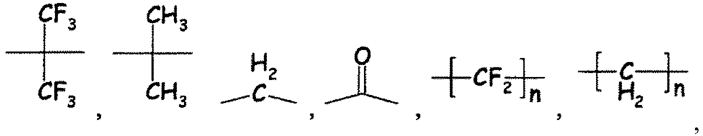 wobei n = ganze Zahl von 1 bis 6, oder eine lineare oder verzweigte aliphatische zweiwertige Gruppe mit bis zu 6 Kohlenstoffatomen steht;
und Mischungen davon; oder
es sich bei mindestens 5 Gew. % der Wiederholungseinheiten des aromatischen Sulfonpolymers (P) um Wiederholungseinheiten (R3) handelt, die ausgewählt sind aus : 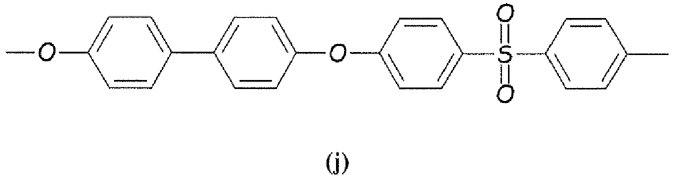 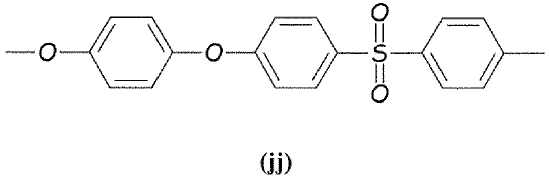 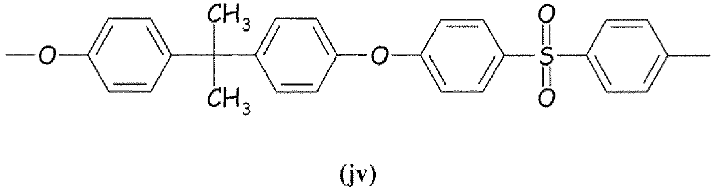 und Mischungen davon;
- mindestens ein Oxid eines Erdalkalimetalls oder eines Übergangsmetalls der Gruppe 12;
- mindestens ein Carboxylat eines Metalls, wobei das Carboxylat mindestens 10 Kohlenstoffatome aufweist;
- mindestens 5 Gew.- %, bezogen auf das Gesamtgewicht der Zusammensetzung, aromatisches Polycarbonat (PC).

2. Aromatisches Sulfonpolymer mit hoher Glasübergangstemperatur enthaltende Zusammensetzung nach Anspruch 1, **dadurch gekennzeichnet, dass** die Zusammensetzung frei von aromatischem Polycarbonat (PC) ist.

3. Aromatisches Sulfonpolymer mit hoher Glasübergangstemperatur enthaltende Zusammensetzung nach einem der vorhergehenden Ansprüche, **dadurch gekennzeichnet, dass** sie mehr als 90 Gew.- %, bezogen auf das Gesamtgewicht der Zusammensetzung, mindestens eines aromatischen Sulfonpolymers (P) umfasst.

4. Aromatisches Polymer mit hoher Glasübergangstemperatur enthaltende Zusammensetzung nach einem der vorhergehenden Ansprüche, **dadurch gekennzeichnet, dass** es sich bei dem Oxid eines Metalls um ein Oxid eines Erdalkalimetalls oder eines Übergangsmetalls der Gruppe 12 handelt.

5. Aromatisches Polymer mit hoher Glasübergangstemperatur enthaltende Zusammensetzung nach einem der vorhergehenden Ansprüche, **dadurch gekennzeichnet, dass** es sich bei dem Carboxylat eines Metalls um ein Carboxylat eines Erdalkalimetalls oder eines Übergangsmetalls der Gruppe 12 handelt.

6. Aromatisches Sulfonpolymer mit hoher Glasübergangstemperatur enthaltende Zusammensetzung nach einem der vorhergehenden Ansprüche, **dadurch gekennzeichnet, dass** es sich bei mindestens 50 Gew.- % der Wiederholungseinheiten des aromatischen Sulfonpolymers (P) um Wiederholungseinheiten (R1) in ihrer Imidform (R1-A) und/oder Amidsäureform ([(R1-B) und (R1-C)] handelt.

7. Aromatisches Sulfonpolymer mit hoher Glasübergangstemperatur enthaltende Zusammensetzung nach einem der Ansprüche 1 bis 5, **dadurch gekennzeichnet, dass** es sich bei 50 Gew. % der Wiederholungseinheiten des aromatischen Sulfonpolymers (P) um Wiederholungseinheiten (R2) und/oder Wiederholungseinheiten (R3) handelt.

8. Aromatisches Sulfonpolymer mit hoher Glasübergangstemperatur enthaltende Zusammensetzung nach einem der vorhergehenden Ansprüche, **dadurch gekennzeichnet, dass** sie 0,02 bis 0,10 Gew.- %, bezogen auf das Gesamtgewicht der Zusammensetzung, des Oxids umfasst.

9. Aromatisches Sulfonpolymer mit hoher Glasübergangstemperatur enthaltende Zusammensetzung nach einem der vorhergehenden Ansprüche, **dadurch gekennzeichnet, dass** sie 0,05 bis 0,35 Gew.- %, bezogen auf das Gesamtgewicht der Zusammensetzung, des Carboxylats umfasst.

10. Aromatisches Sulfonpolymer mit hoher Glasübergangstemperatur enthaltende Zusammensetzung nach einem der vorhergehenden Ansprüche, **dadurch gekennzeichnet, dass** das Gewichtsverhältnis zwischen dem Oxid und dem Carboxylat 0,1 bis 0,5 w/w beträgt.

11. Verfahren zur Herstellung einer Sulfonpolymer mit hoher Glasübergangstemperatur enthaltenden Zusammensetzung nach einem der vorhergehenden Ansprüche, bei dem man :
- das aromatische Sulfonpolymer (P);
- das Oxid eines Metalls;
- das Carboxylat eines Metalls;
mischt.

12. Gegenstand, umfassend die aromatisches Sulfonpolymer mit hoher Glasübergangstemperatur enthaltende Zusammensetzung nach einem der Ansprüche 1 bis 10.

## Revendications

1. Composition de polymère sulfone aromatique à haute température de transition vitreuse comprenant :
- au moins un polymère sulfone aromatique (P), **caracterisée en ce que** au moins 5 % en poids des motifs récurrents du polymère sulfone aromatique (P) sont des motifs récurrents (R1), sous leur forme imide (R1-A) et/ou leurs formes acide amique [(R1-B) et (R1-C)] : 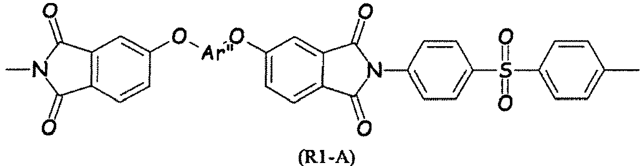 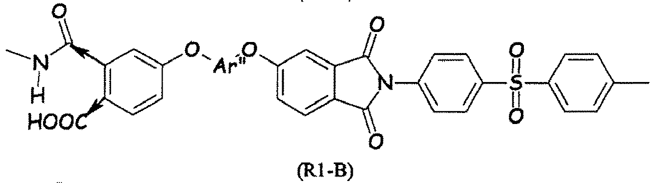 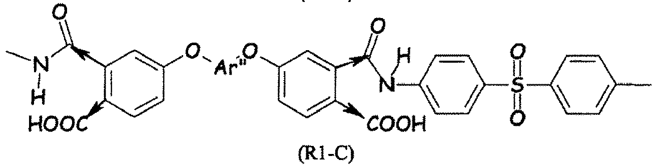 dans lesquelles :
- → désigne une isomérie de telle sorte que dans tout motif récurrent, les groupes vers lesquels les flèches sont tournées peuvent exister comme illustré ou dans une position interchangée ;
- Ar" est choisi parmi les structures suivantes : 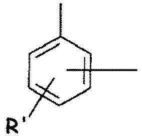 avec les groupes de liaison étant en position ortho, méta ou para, et R' étant un atome d'hydrogène ou un radical alkyle renfermant de 1 à 6 atomes de carbone, 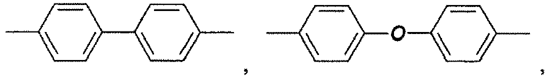 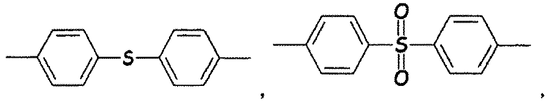 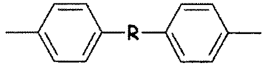 avec R étant un groupe bivalent aliphatique renfermant jusqu'à 6 atomes de carbone, tel qu'un groupe méthylène, un groupe éthylène, un groupe isopropylène, et leurs mélanges ; ou
au moins 5 % en poids des motifs récurrents du polymère sulfone aromatique (P) sont des motifs récurrents (R2), comme illustré ci-dessous : 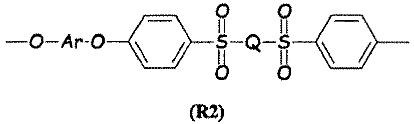 dans lesquels :
- Q est un groupe choisi parmi les structures suivantes : 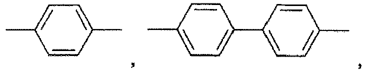 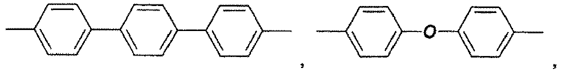 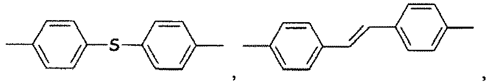 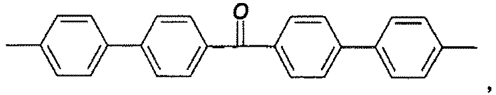 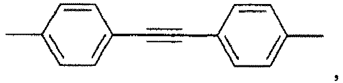 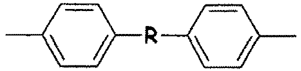 avec R étant : 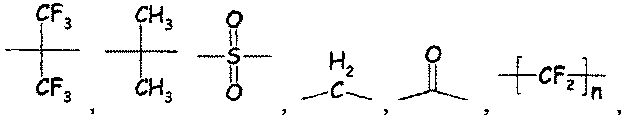 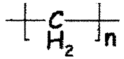 avec n = un entier de 1 à 6, ou un groupe bivalent aliphatique, linéaire ou ramifié, renfermant jusqu'à 6 atomes de carbone ;
et leurs mélanges ;
- Ar est un groupe choisi parmi les structures suivantes : 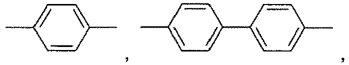 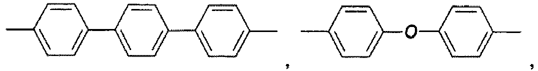 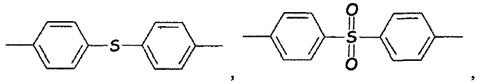 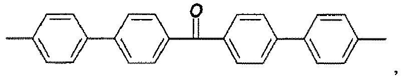 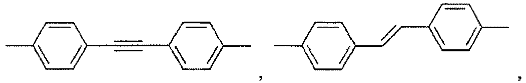 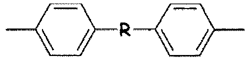 avec R étant : 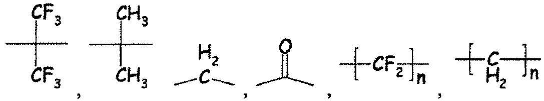 avec n = un entier de 1 à 6, ou un groupe bivalent aliphatique, linéaire ou ramifié, renfermant jusqu'à 6 atomes de carbone ;
et leurs mélanges ;
ou
au moins 5 % en poids des motifs récurrents du polymère sulfone aromatique (P) sont des motifs récurrents (R3) choisis parmi : 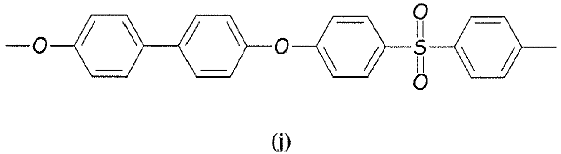 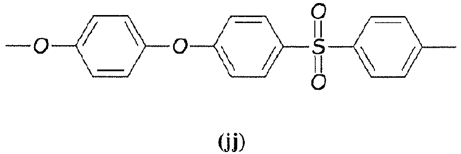 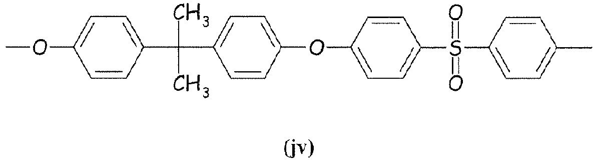 et leurs mélanges ;
- au moins un oxyde d'un métal alcalino-terreux ou d'un métal de transition du groupe 12 ;
- au moins un carboxylate d'un métal, ledit carboxylate renfermant au moins 10 atomes de carbone ;
- moins de 5 % en poids, par rapport au poids total de la composition, de polycarbonate aromatique (PC).

2. Composition de polymère sulfone aromatique à haute température de transition vitreuse selon la revendication 1, **caractérisée en ce que** la composition est exempte de polycarbonate aromatique (PC).

3. Composition de polymère sulfone aromatique à haute température de transition vitreuse, selon l'une quelconque des revendications précédentes, **caracterisée en ce qu'**elle comprend plus de 90 % en poids, par rapport au poids total de la composition, d'au moins un polymère sulfone aromatique (P).

4. Composition de polymère aromatique à haute température de transition vitreuse selon l'une quelconque des revendications précédentes, **caracterisée en ce que** l'oxyde d'un métal est un oxyde d'un métal alcalino-terreux ou d'un métal de transition du groupe 12.

5. Composition de polymère aromatique à haute température de transition vitreuse selon l'une quelconque des revendications précédentes, **caracterisée en ce que** le carboxylate d'un métal est un carboxylate d'un métal alcalino-terreux ou d'un métal de transition du groupe 12.

6. Composition de polymère sulfone aromatique à haute température de transition vitreuse selon l'une quelconque des revendications précédentes, **caractérisée en ce qu'**au moins 50 % en poids des motifs récurrents du polymère sulfone aromatique (P) sont des motifs récurrents (R1), sous leur forme imide (R1-A) et/ou leurs formes acide amique [(R1-B) et (R1-C)].

7. Composition de polymère sulfone aromatique à haute température de transition vitreuse selon l'une quelconque des revendications 1 à 5, **caracterisée en ce qu'**au moins 50 % en poids des motifs récurrents du polymère sulfone aromatique (P) sont des motifs récurrents (R2) et/ou des motifs récurrents (R3).

8. Composition de polymère sulfone aromatique à haute température de transition vitreuse selon l'une quelconque des revendications précédentes, **caractérisée en ce qu'**elle comprend de 0,02 à 0,10 % en poids, par rapport au poids total de la composition, de l'oxyde.

9. Composition de polymère sulfone aromatique à haute température de transition vitreuse selon l'une quelconque des revendications précédentes, **caractérisée en ce qu'**elle comprend de 0,05 à 0,35 % en poids, par rapport au poids total de la composition, du carboxylate.

10. Composition de polymère sulfone aromatique à haute température de transition vitreuse selon l'une quelconque des revendications précédentes, **caractérisée en ce que** le rapport pondéral entre l'oxyde et le carboxylate est de 0,1 à 0,5 poids/poids.

11. Procédé de fabrication de la composition de polymère sulfone à haute température de transition vitreuse selon l'une quelconque des revendications précédentes, qui comprend l'étape consistant à mélanger :
- le polymère sulfone aromatique (P) ;
- l'oxyde d'un métal ;
- le carboxylate d'un métal.

12. Article comprenant la composition de polymère sulfone aromatique à haute température de transition vitreuse selon l'une quelconque des revendications 1 à 10.
